# EUROPÄISCHE PATENTSCHRIFT

(11) **EP 2 293 008 B1**
(45) Veröffentlichungstag und Bekanntmachung des Hinweises auf die Patenterteilung: **15.04.2015**
(21) Anmeldenummer: 10009161.0
(22) Anmeldetag: 03.09.2010
(51) Int. Cl.: F42B 35/00, B64F 5/00, F41G 7/00

(54) **Vorrichtung zur Steuerung von Funktionstests und/oder Serviceprozeduren für von Luftfahrzeugen absetzbare unbemannte Flugkörper**
Device for managing function tests and/or service procedures for unmanned missiles which can be released from aircraft
Dispositif de commande de tests fonctionnels et/ou de procédures de service pour aéronefs sans conducteur pouvant être déposés par des avions

(30) Priorität: 05.09.2009 DE 102009040304
(43) Veröffentlichungstag der Anmeldung: 09.03.2011
(73) Patentinhaber: MBDA Deutschland GmbH, 86529 Schrobenhausen (DE)
(72) Erfinder: Forster, Christian, 86576 Schiltberg (DE); Grabmeier, Michael, 83022 Rosenheim (DE); Stumpp, Christine, 85521 Dachau (DE)
(74) Vertreter: Avenhaus, Beate

(56) Entgegenhaltungen:
- EP-A2- 1 992 904
- DE-A1-102006 054 340
- US-A1- 2005 081 733

## Beschreibung

### TECHNISCHES GEBIET

Die vorliegende Erfindung betrifft eine Vorrichtung zum Steuern von Funktionstests und/oder Serviceprozeduren für von Luftfahrzeugen absetzbare unbemannte Flugkörper.

### STAND DER TECHNIK

Es sind Vorrichtungen zur Durchführung von Funktionstests für unbemannte Flugkörper ebenso bekannt, wie entsprechende Vorrichtungen zur Durchführung von Funktionstests für die Waffenstation eines Luftfahrzeugs, an welcher ein solcher Flugkörper für den Tragflug üblicherweise angebracht ist. Eine solche Vorrichtung ist aus der US 2005/0081733 A1 bekannt. Auch gibt es entsprechende Vorrichtungen, mit denen Wartungen und Servicearbeiten an unbemannten Flugkörpern vorgenommen werden können, beispielsweise neue Missionspläne in einen Missionsdatenspeicher des Flugkörpers geladen oder Fehlerspeicher ausgelesen werden können.

Die DE 10 2004 042 990 B4 offenbart ein Verfahren und eine Vorrichtung zum Test eines Marschflugkörpers. Diese Vorrichtung wird mittels eines Umbilical-Kabels mit dem Flugkörper verbunden. Ein andere Service- und Testeinrichtung für unbemannte Flugkörper wird in der nicht vorveröffentlichten DE 10 2008 054 264 beschrieben.

Die EP 1 895 265 A1 offenbart ein Verfahren und eine Vorrichtung zur Überprüfung der Funktionsfähigkeit von unbemannten, bewaffneten Flugkörpern. In dieser Vorrichtung werden Fehler, die während der Überprüfung festgestellt werden, kategorisiert und ein daraus gebildetes Fehlerbild wird in einem Speicher des Flugkörpers gespeichert.

Die EP 1 992 904 A2 und die DE 10 2007 022 672 B3 offenbaren ein Verfahren zur Zustandsüberwachung einer intelligenten Waffe sowie eine derartige intelligente Waffe. Bei diesem bekannten Verfahren wird eine Wartungs- und Fehlerhistorie in einem im Flugkörper selbst oder in einem extern vorgesehenen Speicher gespeichert, so dass diese Daten für spätere Lebenszyklusbeurteilungen herangezogen werden können. Während der Fertigung der Waffe und auch während späterer Prüf- oder Wartungsarbeiten werden anhand von Funktionstests der Waffe Zustandsbilder erzeugt, die in einem Datenspeicher gespeichert werden. Ein Vergleich von zu unterschiedlichen Zeitpunkten gebildeten Zustandsbildern ermöglicht eine Aussage über Veränderungen des Zustands der Waffe und gegebenenfalls erforderliche Wartungs- oder Reparaturarbeiten und gibt Aufschluss über die Restnutzungsdauer der Waffe.

Die DE 10 2005 058 546 A1 offenbart eine Testeinheit für eine Waffenstation eines Luftfahrzeugs, mit der die Einsatzbereitschaft der Waffenstation des Luftfahrzeugs überprüft werden kann. Die Testeinheit umfasst einen integrierten Computer, der eine Waffensimulationseinrichtung und eine Prüf- und Auswerteeinrichtung aufweist. Bedient wird die Waffenstations-Testeinheit mittels eines externen Computers. Außerdem kann an die Waffenstations-Testeinheit ein Missionsladegerät angeschlossen werden, mit welchem Missionspläne in einen Speicher des Luftfahrzeugs eingespeichert werden können.

Die nicht vorveröffentlichte DE 10 2009 022 007 beschreibt einen unbemannten Flugkörper mit einem Bordcomputer und einem damit verbundenen Programmspeicher. Im Programmspeicher des Bordcomputers ist eine Testsoftware zur Überprüfung der Funktionsfähigkeit des Flugkörpers gespeichert. Der Flugkörper ist mit einem externen Service-Gerät verbindbar, das für die Überprüfung erforderliche Test-Hardware aufweist und das von der auf dem Bordcomputer des Flugkörpers laufenden Test-Software gesteuert wird. Bei diesem unbemannten Flugkörper ist kein externer Steuerungsrechner für das Service-Gerät erforderlich, da der Bordcomputer des Flugkörpers die Funktion des Steuerungsrechners übernimmt.

Die DE 10 2006 054 340 A1 offenbart ein Verfahren zur Überprüfung der Interaktionsfähigkeit zwischen einem Luftfahrzeug und einem mit diesem koppelbaren bewaffneten, unbemannten Flugkörper. Dabei werden der Reihe nach zunächst isoliert die Waffe getestet, dann isoliert die Waffenstation des Luftfahrzeugs getestet, danach wird die Waffe an die Waffenstation des Luftfahrzeugs angebaut und es erfolgt ein weiterer Test der Waffe im angebauten Zustand. Nach jedem dieser Tests führt ein entdeckter fataler Fehler zum Abbruch der gesamten Testsequenz.

Alle vorgenannten Tests und Testeinrichtungen bedürfen zur Durchführung einer eigenständigen Bedieneinrichtung sowie eines speziell für den jeweiligen Test geschulten Personals. Dies bedingt, dass entweder für alle Tests, auch beispielsweise für Tests des Flugkörpers im Depot, hochqualifizierte Spezialisten benötigt werden. Kann dies nicht geleistet werden, beispielsweise bei Streitkräften, die nur eine begrenzte Anzahl an hochqualifiziertem Fachpersonal oder die eine hohe Fluktuationsrate besitzen, so müssen bei Überprüfungen, beispielsweise Einsatz-Verfügbarkeitstests von im Depot lagernden Flugkörpern oder Preflight-Checks vor dem Einsatz, in ihrer Testtiefe und damit in ihrem Aufwand reduzierte Tests mit weniger qualifiziertem Personal durchgeführt werden. Dies wiederum bedingt aber, dass bestimmte Fehler bei solchen Tests mit niedriger Testtiefe nicht entdeckt werden können mit in der Folge entsprechender negativer Auswirkung auf den Missionserfolg bzw. Kollateralschäden während der Missionsdurchführung.

### DARSTELLUNG DER ERFINDUNG

Es ist daher die Aufgabe der vorliegenden Erfindung, eine gattungsgemäße Vorrichtung zum Steuern von Funktionstests und/oder Service-Prozeduren anzugeben, die es auch weniger hoch spezialisiertem Personal ermöglicht, fundierte Tests mit großer Testtiefe durchzuführen. Diese Aufgabe wird durch die Vorrichtung mit den Merkmalen des Patentanspruchs 1 gelöst.

Dazu ist die erfindungsgemäße Vorrichtung ausgestattet mit einer Befehlseingabeeinheit; einer Datenausgabeeinheit; einer Rechnereinheit; zumindest einer Programmspeichereinheit; zumindest einer Schnittstelle, die verbindbar ist mit einer an einer Waffenstation des Luftfahrzeugs anbringbaren Flugkörpersimulationseinrichtung und/oder mit einem am Flugkörper anbringbaren Test- und Servicegerät oder mit einem die Flugkörpersimulationseinrichtung und das Test- und Servicegerät integrierenden kombinierten Gerät.

In der Programmspeichereinheit ist zumindest ein Steuerprogramm für zumindest ein in einem Programmspeicher der Flugkörpersimulationseinrichtung und/oder ein in einem Programmspeicher des Service- und Testgeräts () gespeichertes Test- oder Serviceprogramm speicherbar und in der Rechnereinheit ausführbar, wobei das zumindest eine Test- oder Serviceprogramm mittels der Befehlseingabeeinheit von einem Benutzer auswählbar und startbar ist und wobei Rückmeldungen des Test- oder Serviceprogramms mittels der Datenausgabeeinheit an den Benutzer ausgegeben werden.

### VORTEILE

Diese erfindungsgemäße Vorrichtung besitzt den Vorteil, dass nur eine einzige Steuervorrichtung für eine Vielzahl von Tests und/oder Serviceprozeduren vorgesehen sein muss, die zum Steuern und Bedienen der extern angeschlossenen Schnittstellengeräte, wie beispielsweise der Flugkörpersimulationseinrichtung oder dem Test- und Servicegerät, vorgesehen und dazu mit einer entsprechenden Bediensoftware mit gleichartiger, intuitiver Benutzeroberfläche ausgestattet ist. Mittels der als "Steuerprogramm" bezeichneten Bediensoftware ist es möglich, dass auf einfache Weise auch von nicht hoch spezialisierten Kräften entsprechende Programme zum Testen des Flugkörpers oder der Waffenstation des Luftfahrzeugs bedient und gesteuert werden können.

In einer bevorzugten Ausführungsform sind Prüfmittel vorgesehen, die bewirken, dass ein gespeichertes Test- oder Serviceprogramm mittels der Befehlseingabeeinheit nur dann auswählbar oder startbar ist, wenn die zugehörige Schnittstelle korrekt über die Flugkörpersimulationseinrichtung mit der Waffenstation beziehungsweise über das Test- und Servicegerät mit dem Flugkörper verbunden ist.

Eine vorteilhafte Weiterbildung zeichnet sich dadurch aus, dass die Flugkörpersimulationseinrichtung und deren Test- oder Serviceprogramm von dem in der Rechnereinheit ausgeführten Steuerprogramm steuerbar sind.

Dabei ist es besonders vorteilhaft, wenn das Test- und Servicegerät und dessen Test- oder Serviceprogramm von dem in der Rechnereinheit ausgeführten Steuerprogramm steuerbar ist.

Eine andere bevorzugte Ausführungsform zeichnet sich dadurch aus, dass in der Programmspeichereinheit der Vorrichtung oder in einem Programmspeicher der Flugkörpersimulationseinrichtung zumindest ein Programm zum Testen der Waffenstation zumindest eines Luftfahrzeugs gespeichert ist.

Vorzugsweise sind dabei in der Programmspeichereinheit der Vorrichtung oder in einem Programmspeicher der Flugkörpersimulationseinrichtung mehrere Programme zum Testen der Waffenstationen jeweils unterschiedlicher Luftfahrzeugtypen gespeichert, die jeweils flugkörperspezifisch ausgeprägt sind.

In noch einer anderen Ausführungsform der Erfindung ist in der Programmspeichereinheit der Vorrichtung oder in einem Programmspeicher des Test- und Servicegeräts zumindest ein Programm zum Testen von zumindest einem Flugkörper gespeichert.

Besonders vorteilhaft ist dabei, wenn in der Programmspeichereinheit der Vorrichtung oder in einem Programmspeicher des Test- und Servicegeräts mehrere Programme zum Testen jeweils unterschiedlicher Flugkörpertypen gespeichert sind.

Vorzugsweise ist in der Programmspeichereinheit der Vorrichtung oder in einem Programmspeicher des Test- und Servicegeräts zumindest ein Programm zur Wartung eines Flugkörpers, insbesondere zum Laden eines Missionsplans in einen Speicher des Flugkörpers, gespeichert.

Dabei ist es besonders von Vorteil, wenn in der Programmspeichereinheit der Vorrichtung oder in einem Programmspeicher des Test- und Servicegeräts mehrere Programme zur Wartung jeweils unterschiedlicher Flugkörpertypen gespeichert sind.

Eine andere alternative und bevorzugte Ausführungsform zeichnet sich dadurch aus, dass in der Programmspeichereinheit der Vorrichtung oder in einem Programmspeicher des Test- und Servicegeräts zumindest ein Programm zum Auslesen und Auswerten von Lebenszyklusdaten aus einem Datenspeicher zumindest eines Flugkörpers gespeichert ist.

Vorteilhaft ist dabei, wenn in der Programmspeichereinheit der Vorrichtung oder in einem Programmspeicher des Test- und Servicegeräts mehrere Programme zum Auslesen und Auswerten von Lebenszyklusdaten jeweils unterschiedlicher Flugkörpertypen gespeichert sind.

Eine vorteilhafte Weiterbildung umfasst das zusätzliche Merkmal, dass in der Programmspeichereinheit ein Programm zum Erstellen oder zum Modifizieren eines Missionsplans für den Flugkörper gespeichert ist. Dabei kommt bevorzugt das in der nicht vorveröffentlichten DE 10 2008 017 975 offenbarte Verfahren zur vereinfachten Missionsplanung zur Anwendung, deren Offenbarung hier vollumfänglich durch Bezugnahme darauf eingeschlossen wird.

Zudem ist ein Programm zum Überspielen eines Missionsplans in den Flugkörper gespeichert und in der Rechnereinheit ausführbar.

Eine weitere vorteilhafte Weiterbildung zeichnet sich dadurch aus, dass in der Programmspeichereinheit zumindest ein Trainingsprogramm für das Testen und/oder Warten des Flugkörpers und/oder der Waffenstation des Luftfahrzeugs gespeichert und in der Rechnereinheit ausführbar ist.

Eine besonders vorteilhafte Lösung der gestellten Aufgabe wird erreicht durch eine Anordnung aus einer erfindungsgemäßen einer Flugkörpersimulationseinrichtung und/oder einem Test- und Servicegerät, das beziehungsweise die mit der Vorrichtung über deren Schnittstelle(n) verbundenen ist beziehungsweise sind.

In einer bevorzugten Weiterbildung davon sind die Flugkörpersimulationseinrichtung und das Test- und Servicegerät zu einem kombinierten Gerät integriert ausgebildet.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: eine schematische Darstellung einer erfindungsgemäßen Vorrichtung mit angeschlossener Peripherie;
- Fig. 2: eine schematische Darstellung einer alternativen Ausgestaltung der erfindungsgemäßen Vorrichtung mit angeschlossener Peripherie;
- Fig. 3: eine schematische Darstellung einer weiteren alternativen Ausgestaltung der erfindungsgemäßen Vorrichtung mit angeschlossener Peripherie und
- Fig. 4: einen Strukturbaum, der die von dem in der Erfindung ablaufenden Steuerprogramm durchführbaren Steuerungen für externe Geräte und deren Steuerprogramme wiedergibt.

### DARSTELLUNG VON BEVORZUGTEN AUSFÜHRUNGSBEISPIELEN

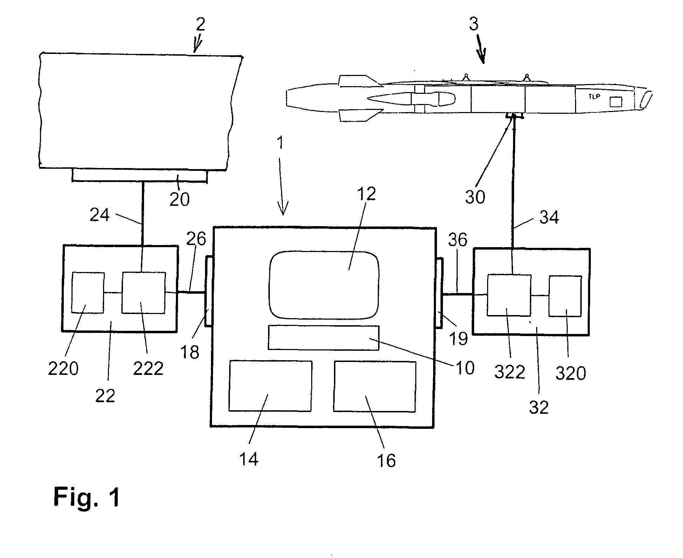

In Fig. 1 ist schematisch eine Vorrichtung 1 zur Steuerung von Funktionstests und/oder Serviceprozeduren für einen von einem Luftfahrzeug 2 absetzbaren unbemannten Flugkörper 3 dargestellt.

Die Vorrichtung 1 ist mit einer Befehlseingabeeinheit 10, beispielsweise einer Tastatur, und einer Datenausgabeeinheit 12, beispielsweise einem Bildschirm, versehen. Alternativ oder zusätzlich kann der die Datenausgabeeinheit 12 bildende Bildschirm auch als berührungsempfindlicher Bildschirm (Touch-Screen Monitor) ausgestaltet sein und so gleichzeitig eine Befehlseingabeeinheit bilden. Dennoch kann in diesem Fall zusätzlich eine Tastatur als Befehlseingabeeinheit vorgesehen sein.

Weiterhin enthält die Vorrichtung 1 zumindest eine Rechnereinheit 14 und zumindest eine Programmspeichereinheit 16. Die Rechnereinheit 14 ist in bekannter Weise über Datenleitungen mit der Befehlseingabeeinheit 10, der Datenausgabeeinheit 12 und der Programmspeichereinheit 16 zum Datenaustausch verbunden.

Weiterhin weist die Vorrichtung 1 eine erste Schnittstelle 18 zur Verbindung der Vorrichtung mit einer an einer Waffenstation 20 des Luftfahrzeugs 2 anbringbaren Flugkörpersimulationseinrichtung 22 auf. Die Schnittstelle 18 ist im Inneren der Vorrichtung 1 mit der Rechnereinheit 14 zum Datenaustausch verbunden. Zur Herstellung einer Datenaustauschverbindung zwischen dem Luftfahrzeug 2 und der Vorrichtung 1 ist die Flugkörpersimulationseinrichtung 22 über eine erste Datenübertragungsverbindung 24 mit der Waffenstation 20 des Luftfahrzeugs 2 verbunden und eine zweite Datenübertragungsverbindung 26 verbindet die Flugkörpersimulationseinrichtung 22 mit der ersten Schnittstelle 18 der Vorrichtung 1.

Die Vorrichtung 1 weist eine zweite Schnittstelle 19 auf, die intern mit der Rechnereinheit 14 zum Datenaustausch verbunden ist. An die zweite Schnittstelle 19 ist ein an einem Datenanschluss 30 des Flugkörpers 3 angeschlossenes Test- und Servicegerät 32 zum Datenaustausch wirksam angeschlossen. Dazu ist das Test- und Servicegerät 32 über eine dritte Datenübertragungsverbindung 34 mit dem Datenanschluss 30 des Flugkörpers 3 verbunden und über eine vierte Datenübertragungsverbindung 36 ist das Test- und Servicegerät 32 mit der zweiten Schnittstelle 19 und daher mit der Rechnereinheit 14 wirksam verbunden.

In der Programmspeichereinheit 16 ist zumindest ein Steuerprogramm für zumindest ein in einem Programmspeicher 220 der Flugkörpersimulationseinrichtung 22 gespeichertes Test- oder Serviceprogramm gespeichert, wobei dieses Test- oder Serviceprogramm in einer Rechnereinheit 222 der Flugkörpersimulationseinrichtung 22 ausführbar ist. Das Steuerprogramm selbst ist in der Rechnereinheit 14 der Vorrichtung 1 ausführbar.

Dieses Steuerprogramm für die Flugkörpersimulationseinrichtung ist an den jeweiligen Luftfahrzeugtyp (zum Beispiel Tornado, Eurofighter, Gripen, F-18, F-15, Heron, Predator ..) und an den jeweiligen Flugkörpertyp (zum Beispiel TAURUS, JDAM, IRIS-T, Meteor ..) angepasst und beinhaltet beispielsweise folgende Funktionen nach MIL-Standard 1760 :
- Identitätsprüfung und Kommunikations-Check Flugkörper - Luftfahrzeug
- Check der Navigation des Luftfahrzeuges (Quick-Check ohne Stimulation von Staudruck und statischem Druck)
- operationelle Release-Sequenz mit Stimulation von Stau/Statik am Luftfahrzeug und Auslösung der Pylon-Kartuschenzündung, Prüfung der Zündsignale "DC-PW2" und "Release Consent"
- simulierte Release-Sequenz ohne Auslösung der Pylon-Kartuschenzündung
- Interaktions-Sequenzen zum Test der korrekten Fehlerreaktion des Luftfahrzeuges :
   - "Hangfire"-Simulation
   - Flugkörper-NOGO während des Hochlaufes, bei der Navigationsaufrichtung, während der Release-Sequenz
   - Ausfall eines Milbus-Kanales und Umschalten zwischen den redundanten Milbus-Kanälen.

Alternativ oder zusätzlich ist das in der Programmspeichereinheit 16 gespeicherte Steuerprogramm zur Steuerung von zumindest einem in einem Programmspeicher 320 des Test- und Servicegeräts 32 gespeicherten Test- oder Serviceprogramm ausgestaltet, das in einer Rechnereinheit 322 des Test- und Servicegeräts 32 ausführbar ist.

Folgende Funktionen beinhaltet dieses Steuerprogramm für das Test- und Servicegerät, angepasst an den jeweiligen Flugkörpertypen (zum Beispiel TAURUS, JDAM, IRIS-T, Meteor ...):
- operationeller Test des Flugkörpers (O-Level-Test) mit Prüfung, ob der Missionsplan korrekt geladen ist und ob die Navigationsaufrichtung in Ordnung ist;
- Depot-Prüfung des Flugkörpers (D-Level-Test) mit Prüfung aller reversiblen Funktionen des Flugkörpers (Sensoren, Aktuatoren, Funktionsketten ...).

Die Bedienung des Steuerprogramms und damit die Bedienung des Test- oder Serviceprogramms beziehungsweise der Test- oder Serviceprogramme ist mittels der Befehlseingabeeinheit 10 von einem Benutzer auswählbar und kann von dort aus gestartet werden. Rückmeldungen des Steuerprogramms und auch des jeweiligen Test- oder Serviceprogramms werden mittels der Datenausgabeeinheit 12 an den Benutzer ausgegeben.

Eine besonders einfache Bedienung der Vorrichtung wird dann erzielt, wenn das Steuerprogramm als Bediensoftware der Vorrichtung eine graphische Benutzeroberfläche aufweist und wenn die Datenausgabeeinheit 12 als berührungsempfindlicher Bildschirm ausgebildet ist und somit gleichzeitig eine Befehlseingabeeinheit bildet.

Im Steuerprogramm der Vorrichtung 1 und/oder auch im jeweiligen Serviceprogramm der Flugkörpersimulationseinrichtung 22 und/oder des Test- und Servicegeräts 32 sind Prüfroutinen vorgesehen, mittels derer überprüfbar ist, ob die jeweilige Schnittstelle 18, 19 der Vorrichtung 1 mit der Flugkörpersimulationseinrichtung 22 beziehungsweise dem Test- und Servicegerät 32 korrekt verbunden ist, und die ebenfalls überprüfen, ob die Flugkörpersimulationseinrichtung 22 mit der Waffenstation 20 des Luftfahrzeugs 2 beziehungsweise das Service- und Testgerät 32 korrekt mit dem Flugkörper 3 verbunden ist. Erst wenn die jeweiligen Datenübertragungsverbindungen korrekt hergestellt sind, ermöglicht es das Steuerprogramm, dass das entsprechende Test- oder Serviceprogramm mittels der Befehlseingabeeinheit 10 auswählbar und startbar ist.

Mit der Vorrichtung 1 und dem in der Rechnereinheit 14 ablaufenden Steuerprogramm wird eine den bisherigen für Tests von Flugkörpern und Waffenstationen von Luftfahrzeugen zur Verfügung stehenden Test- und Servicegeräten beziehungsweise Flugkörpersimulationseinrichtungen, die vom Nutzer jeweils individuell bedient werden mussten, übergeordnete Steuerungsvorrichtung geschaffen, die es auch weniger geschultem Personal ermöglicht, die entsprechenden Funktionstests und/oder Serviceprozeduren durchzuführen. Das Steuerprogramm der Vorrichtung 1 bildet dabei eine benutzerfreundliche Mensch-Maschine-Schnittstelle, die im Hintergrund die Flugkörpersimulationseinrichtung 22 und/oder das Test- und Servicegerät 32 steuert. Die bedienerfreundliche Benutzerführung durch das Steuerprogramm lässt den Benutzer bestimmte Funktionstests beziehungsweise Serviceprozeduren auswählen, prüft die gesamte Anordnung, die aus der Vorrichtung, der Flugkörpersimulationseinrichtung 22 und/oder dem Test- und Servicegerät 32 besteht, selbsttätig auf ihre Funktionsfähigkeit und zeigt dieses Prüfungsergebnis dem Benutzer an. Ist die Anordnung einsatzfähig, so erhält der Benutzer einen entsprechenden Hinweis. Ebenso erhält der Benutzer konkrete Fehlerhinweise, wenn keine Funktionsfähigkeit der Anordnung festgestellt worden ist. Der Benutzer kann dann auf Wunsch weitere Hinweise zur Fehlerbehebung abfragen.

Auf die gleiche Weise erhält der Benutzer auch verständliche Fehlermeldungen, falls während eines Funktionstests und/oder einer Serviceprozedur Fehler auftreten sollten.

Auf diese Weise kann mittels der erfindungsgemäßen Vorrichtung 1 eine Vielzahl unterschiedlicher Funktionstests und/oder Serviceprozeduren auch von angelerntem und nicht hochqualifiziertem Personal durchgeführt werden. Die erfindungsgemäße Vorrichtung 1 ermöglicht es dem angelernten Nutzer, leistungsfähige Tests des Flugkörpers 3 sowohl bei einer Prüfung eines im Depot lagernden Flugkörpers (D-Level-Test), als auch unmittelbar vor dem Anbau des Flugkörpers an ein Trägerluftfahrzeug (O-Level-Test) durchzuführen. Des Weiteren ermöglicht es die Vorrichtung 1 dem spezialisierten Nutzer, tiefergehende Tests eines Flugkörpers im Depot durchzuführen (D-Level, Quick = ohne Anbau von Stimulationen, Full = mit Anbau von Stimulationen, (M) = dem militärischen Nutzer verfügbar, (I) = nur für Personal des Flugkörperherstellers verfügbar). Beispielhaft werden in der nachstehenden Tabelle einzelne Funktionstests eines Flugkörpers angegeben, die mit der erfindungsgemäßen Vorrichtung 1 in den unterschiedlichen Test-Levels durchführbar sind:

| Nr. | Test- bzw. Serviceprozedur | O-Level | D-Level Quick (M) | D-Level Full (M) | D-Level (I) |
|---|---|---|---|---|---|
| 1 | Download eines Missionsplans erforderlich | ja | nein | nein | nein |
| 2 | Test der 3 x 115V 400Hz Stromversorgung | ja | ja | ja | ja |
| 3 | Test der 270 V-Verbraucher (Steuerflächenantrieb, Triebwerks-Versorgung) | ja | ja | ja | ja |
| 4 | Test der Kommunikation über die Umbilical-1760-Schnittstelle | ja | ja | ja | ja |
| 5 | auslösbare Tests der LRUs (PBIT, IBIT) | ja | ja | ja | ja |
| 6 | kontinuierliche Tests der LRUs (CBIT) | ja | ja | ja | ja |
| 7 | erweiterter Test des GPS-Empfängers | nein | ja | ja | ja |
| 8 | erweiterter Test des Laserentfernungssensors | nein | ja | ja | ja |
| 9 | Test der GPS-Lock-on-Leistung (Umbilical-GPS-Antennenanschluss und Flugkörper-GPS-Antenne) | nein | nein | ja | ja |
| 10 | Test des Suchers (Detektor) | nein | nein | ja | ja |
| 11 | Test des Suchers (Gimbal) | nein | ja | ja | ja |
| 12 | Test der Sucherkühlung (Dauer, Volumenstrom) | nein | nein | ja | ja |
| 13 | Test der Sucherleistung (bildbasierte Navigation, Zieltracker) | nein | nein | ja | ja |
| 14 | Test der IMU-Leistung | nein | nein | ja | ja |
| 15 | Test der RALT-Leistung | nein | nein | ja | ja |
| 16 | Test der Navigationskette (IMU - CWC - NAVC) | ja | ja | ja | ja |
| 17 | Bewegungstests der Rudermaschinen (Sinus- oder Sprung-Profil) | nein | nein | ja | ja |
| 18 | Bericht über detaillierte Fehlerinformation im Falle einer Testsequenz mit NOGO | nein | ja | ja | ja |
| 19 | Report nicht fataler Fehler, die während einer Testsequenz festgestellt worden sind | nein | ja | ja | ja |
| 20 | Report diverser Messungen, die während einer Testsequenz durchgeführt worden sind | nein | ja | ja | ja |
| 21 | Datenübertragung der Messungen zur Datenbank der Lebenszyklusüberwachung | nein | ja | ja | ja |
| 22 | Lebenszyklusauswertungen bezogen auf ein Flugkörperexemplar, auf eine Flugkörper-Population, auf einen oder mehrere Messparameter | nein | nein | ja | ja |
| 23 | Fehlerbildverwaltung | nein | nein | ja | ja |
| 24 | Vorschlag für einen LRU-Austausch auf der Grundlage einer Fehlerbilddatenbank | nein | nein | ja | ja |
| 25 | Test des Resolver der Rudermaschinen (FRT) | nein | nein | nein | ja |
| 26 | Upgrade der Flugkörpersoftware | nein | nein | nein | ja |
| 27 | Test irreversibler Flugkörperfunktionen (Thermalbatterie, Entriegelung von Steuerflächen usw.) | nein | nein | nein | nein |

Unter dem O-Level-Test ist ein Test unter Betriebsbedingungen kurz vor der Anbringung des Flugkörpers am Luftfahrzeug zu verstehen. Daher ist auch ein geladener Missionsplan Voraussetzung für die erfolgreiche Testdurchführung. Der D-Level-M-Test ist ein Test im Rahmen der Flugkörperwartung im Depot durch Personal der militärischen Nutzer und der D-Level-I-Test ist ein Test im Zuge der Wartung eines Flugkörpers im Depot durch Fachkräfte des Flugkörperherstellers. In beiden Fällen befindet sich der Flugkörper noch in seinem Lager- und Transport-Container, wobei der Containerdeckel abgenommen ist. Der Flugkörper ist in diesem Lagerzustand noch mit keinem Missionsplan beladen. Eine Testmöglichkeit ist die Option 'Quick', die die Prüfung ohne Teststimulationen erlaubt (siehe DE 10 2004 042 990 B4). Der Test aller reversiblen Funktionen des Flugkörpers beziehungsweise von sicherheitskritischen Funktionen, die für den Abgang des Flugkörpers vom Trägerflugzeug relevant sind, wird durch die Testoption 'Full' ermöglicht, die den Anbau einiger Stimulationen (externe Kühlung, GPS-Antenne, RALT-Verzögerungsleitung, Suchermaske) an den Flugkörper erfordert (siehe DE 10 2004 042 990 B4).

Weiterhin ermöglicht die erfindungsgemäße Vorrichtung folgende Missionsplanungsfunktionen :
- Laden eines Missionsplanes in den Flugkörper
- Auslesen der Identifizierungsattribute des geladenen Missionsplanes
- Löschen eines geladenen Missionsplanes
- Darstellen der Inhalte eines Missionsplanes (MMD-Explorer) :
   - Koordinaten des Release-Punktes und zugehörige taktische Entscheidungen
   - horizontaler und vertikaler Marschflugpfad
   - Angriffstrajektorie
   - Geländeprofil
   - taktische Attribute von Kontrollpunkten (z.B. Navigationsmode)
   - Navigationslandmarken
   - Ziellandmarke
   - Parameter des Zündprogrammes
- Modifizieren eines Missionsplanes zum Beispiel von taktischen Entscheidungen (Releasepunkt, Kontrollpunkt), Austausch des Zündprogrammes, Austausch der Angriffstrajektorie, Anpassung des vorgeplanten Releasedatums zwecks korrekter Zeit-Initialisierung (UTC) des Flugkörper-GPS-Receivers
- vereinfachte Missionsplanung entsprechend der nicht vorveröffentlichten DE 10 2008 017 975.

Diese Missionsplanungsfunktionen ermöglichen es dem Nutzer, zu prüfen, ob er den richtigen Missionsplan ausgewählt hat. Weiterhin werden eine kurzfristige Anpassung eines Missionsplanes an veränderte Umstände sowie eine schnelle Missionsplanung für zeitkritische Ziele ermöglicht.

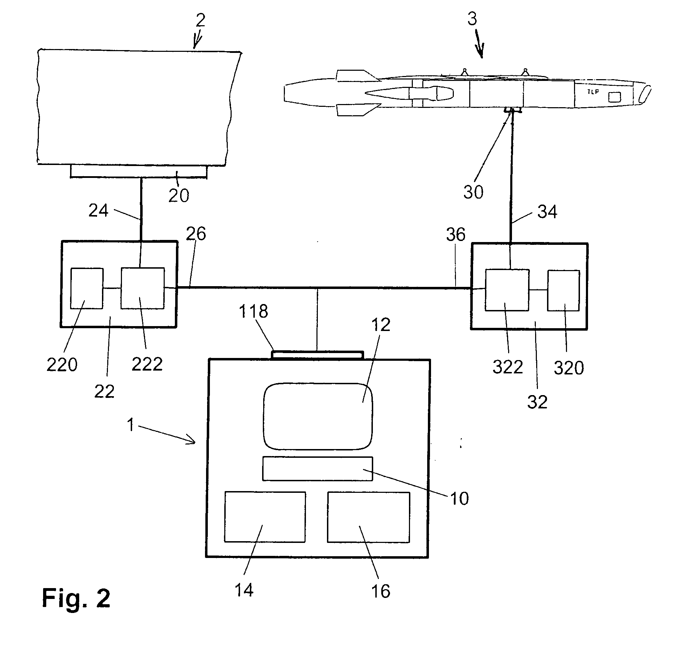

In Fig. 2 ist eine zweite, alternative Ausführungsform der erfindungsgemäßen Vorrichtung mit angeschlossener Peripherie dargestellt, bei der die erste Schnittstelle und die zweite Schnittstelle zu einer gemeinsamen Schnittstelle 118 zusammengefasst sind. Der Vorteil dieser Ausführungsform liegt darin, dass nur ein Schnittstellentyp für das Test- und Servicegerät 32 und für die Flugkörpersimulationseinrichtung 22 definiert zu sein braucht.

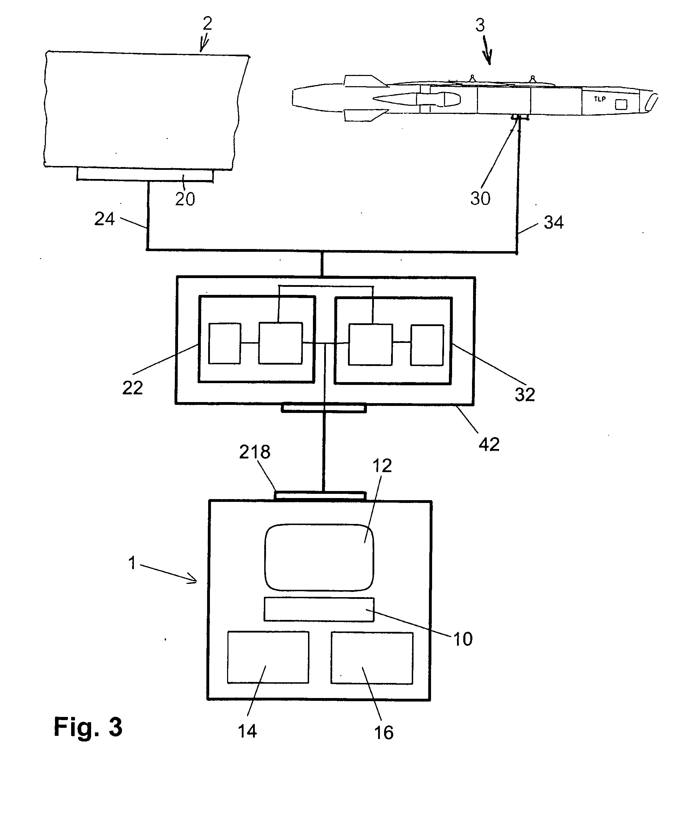

Eine weitere dritte Ausführungsform ist in Fig. 3 gezeigt. Bei dieser Ausführungsform ist nur eine gemeinsame Schnittstelle 218 vorgesehen, an die ein kombiniertes Gerät 42 anschließbar ist. Dabei sind die Flugkörpersimulationseinrichtung 22 und das Test- Servicegerät 32 im kombinierten Gerät 42 integriert. Dadurch wird der Geräteaufbau zusätzlich vereinfacht.

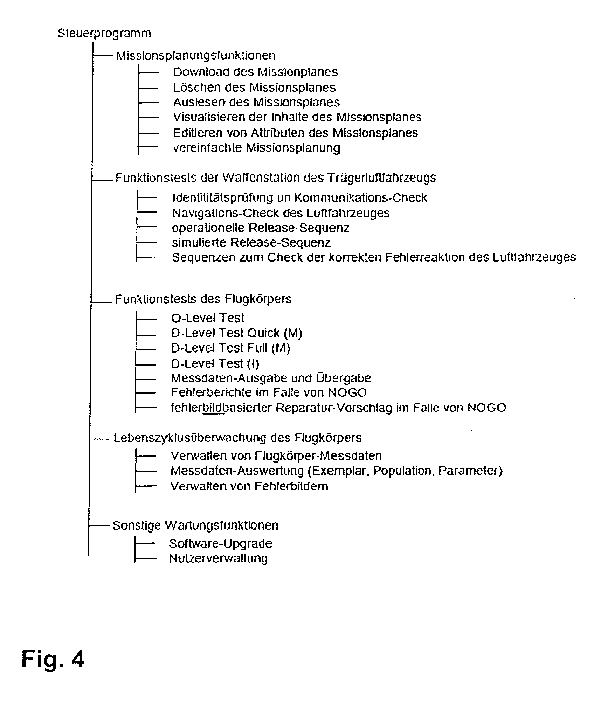

Die erfindungsgemäße Vorrichtung erlaubt es, in bisher nicht dagewesener Weise, auf einfache Art Funktionstests sowohl von der Waffenstation des Trägerluftfahrzeugs, als auch vom Flugkörper durchzuführen und dadurch die Funktionszuverlässigkeit vom Trägerflugzeug und vom Flugkörper zu erhöhen. Zudem können Funktionen für die Missionsplanung und die Lebenszyklusüberwachung des Flugkörpers integriert sein sowie weitere Wartungsfunktionen für zum Beispiel Software-Upgrades des Flugkörpers vorgesehen sein. Fig. 4 zeigt einen Strukturbaum, der die vom Steuerprogramm durchführbaren Steuerungen für externe Geräte und deren Steuerprogramme wiedergibt.

Durch die erfindungsgemäße Vorrichtung und insbesondere durch die erfindungsgemäße Anordnung wird ein einheitlicher, bausteinartiger Gerätesatz sowohl für die Nutzung in der Industrie, als auch durch militärische und industrielle Kräfte im Flugkörperdepot, als auch für den unmittelbaren Einsatz im Luftfahrzeuggeschwader geschaffen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Vorrichtung
- 2: Luftfahrzeug
- 3: Flugkörper
- 10: Befehlseingabeeinheit
- 12: Datenausgabeeinheit
- 14: Rechnereinheit
- 16: Programmspeichereinheit
- 18: Schnittstelle
- 19: zweite Schnittstelle
- 20: Waffenstation
- 22: Flugkörpersimulationseinrichtung
- 24: Datenaustauschkabel
- 26: Datenübertragungskabel
- 30: Datenanschluss
- 32: Test- und Servicegerät
- 34: dritte Datenübertragungsleitung
- 36: vierte Datenübertragungsleitung
- 118: Schnittstelle
- 218: Schnittstelle
- 220: Programmspeicher
- 222: Rechnereinheit
- 320: Programmspeicher
- 322: Rechnereinheit

### Abkürzungsliste

Es bedeuten:
- CBIT: Eingebauter kontinuierlicher Test (continuous built-in test)
- CWC: Zentraler Waffencomputer (central weapon computer)
- FRT: Steuerflächen-Resolvertest (fin resolver test)
- IBIT: Eingebauter ausgelöster Test (initiated built-in test)
- IMU: Inertialmesseinheit (inertial measurement unit)
- LRU: leicht tauschbare Einheit (line replaceable unit)
- MMD: Missionsplan (missile mission data)
- NAVC: Navigationscomputer (navigation computer)
- PBIT: Eingebauter Einschalttest (power-on built-in test)
- RALT: Radarhöhenmesser (radar altimeter)

## Patentansprüche

1. Vorrichtung zur Steuerung von Funktionstests und/oder Serviceprozeduren für von Luftfahrzeugen absetzbare unbemannte Flugkörper mit
- einer Befehlseingabeeinheit (10);
- einer Datenausgabeeinheit (12);
- einer Rechnereinheit (14);
- zumindest einer Programmspeichereinheit (16);
- einer ersten Schnittstelle (18), die verbindbar ist mit einer an einer Waffenstation (20) des Luftfahrzeugs (2) anbringbaren Flugkörpersimulationseinrichtung (22), und
- einer zweiten Schnittstelle (19), die verbindbar ist mit einem am Flugkörper (3) anbringbaren Test- und Servicegerät (32)
- wobei in der Programmspeichereinheit (16) zumindest ein Steuerprogramm für zumindest ein in einem Programmspeicher (220) der Flugkörpersimulationseinrichtung (22) und/oder ein in einem Programmspeicher (320) des Test- und Servicegeräts (32) gespeichertes Test- oder Serviceprogramm speicherbar und in der Rechnereinheit (14) ausführbar ist;
- wobei das zumindest eine Test- oder Serviceprogramm mittels der Befehlseingabeeinheit (10) von einem Benutzer auswählbar und startbar ist und
- wobei Rückmeldungen des Test- oder Serviceprogramms mittels der Datenausgabeeinheit (12) an den Benutzer ausgegeben werden.

2. Vorrichtung zur Steuerung von Funktionstests und/oder Serviceprozeduren für von Luftfahrzeugen absetzbare unbemannte Flugkörper mit
- einer Befehlseingabeeinheit (10);
- einer Datenausgabeeinheit (12);
- einer Rechnereinheit (14);
- zumindest einer Programmspeichereinheit (16);
- einer Schnittstelle (118), die verbindbar ist mit einer an einer Waffenstation (20) des Luftfahrzeugs (2) anbringbaren Flugkörpersimulationseinrichtung (22) und mit einem am Flugkörper (3) anbringbaren Test- und Servicegerät (32)
- wobei in der Programmspeichereinheit (16) zumindest ein Steuerprogramm für zumindest ein in einem Programmspeicher (220) der Flugkörpersimulationseinrichtung (22) und/oder ein in einem Programmspeicher (320) des Test- und Servicegeräts (32) gespeichertes Test- oder Serviceprogramm speicherbar und in der Rechnereinheit (14) ausführbar ist;
- wobei das zumindest eine Test- oder Serviceprogramm mittels der Befehlseingabeeinheit (10) von einem Benutzer auswählbar und startbar ist und
- wobei Rückmeldungen des Test- oder Serviceprogramms mittels der Datenausgabeeinheit (12) an den Benutzer ausgegeben werden.

3. Vorrichtung zur Steuerung von Funktionstests und/oder Serviceprozeduren für von Luftfahrzeugen absetzbare unbemannte Flugkörper mit
- einer Befehlseingabeeinheit (10);
- einer Datenausgabeeinheit (12);
- einer Rechnereinheit (14);
- zumindest einer Programmspeichereinheit (16);
- einer Schnittstelle (218), die verbindbar ist mit einem eine Flugkörpersimulationseinrichtung und ein Test- und Servicegerät integrierenden kombinierten Gerät (42);
- wobei in der Programmspeichereinheit (16) zumindest ein Steuerprogramm für zumindest ein in einem Programmspeicher (220) der Flugkörpersimulationseinrichtung (22) und/oder ein in einem Programmspeicher (320) des Test- und Servicegeräts (32) gespeichertes Test- oder Serviceprogramm speicherbar und in der Rechnereinheit (14) ausführbar ist;
- wobei das zumindest eine Test- oder Serviceprogramm mittels der Befehlseingabeeinheit (10) von einem Benutzer auswählbar und startbar ist und
- wobei Rückmeldungen des Test- oder Serviceprogramms mittels der Datenausgabeeinheit (12) an den Benutzer ausgegeben werden.

4. Vorrichtung nach einem der Ansprüche 1, 2 oder 3,
**dadurch gekennzeichnet,**
**dass** Prüfmittel vorgesehen sind, die bewirken, dass ein gespeichertes Test- oder Serviceprogramm mittels der Befehlseingabeeinheit (10) nur dann auswählbar oder startbar ist, wenn die zugehörige Schnittstelle (18, 19; 118; 218) korrekt über die Flugkörpersimulationseinrichtung (22) mit der Waffenstation (20) beziehungsweise über das Test- und Servicegerät (32) mit dem Flugkörper (3) verbunden ist.

5. Vorrichtung nach einem der Ansprüche 1 bis 4,
**dadurch gekennzeichnet,**
**dass** die Flugkörpersimulationseinrichtung (22) und deren Test- oder Serviceprogramm von dem in der Rechnereinheit (14) ausgeführten Steuerprogramm steuerbar sind.

6. Vorrichtung nach einem der Ansprüche 1 bis 5,
**dadurch gekennzeichnet,**
**dass** das Test- und Servicegerät (32) und dessen Test- oder Serviceprogramm von dem in der Rechnereinheit (14) ausgeführten Steuerprogramm steuerbar sind.

7. Vorrichtung nach einem der vorhergehenden Ansprüche,
**dadurch gekennzeichnet,**
**dass** in der Programmspeichereinheit (16) der Vorrichtung (1) oder in einem Programmspeicher (220) der Flugkörpersimulationseinrichtung (22) zumindest ein Programm zum Testen der Waffenstation zumindest eines Luftfahrzeugs gespeichert ist.

8. Vorrichtung nach Anspruch 7,
**dadurch gekennzeichnet,**
**dass** in der Programmspeichereinheit (16) der Vorrichtung (1) oder in einem Programmspeicher (220) der Flugkörpersimulationseinrichtung (22) mehrere Programme zum Testen der Waffenstationen jeweils unterschiedlicher Luftfahrzeugtypen gespeichert sind.

9. Vorrichtung nach einem der vorhergehenden Ansprüche,
**dadurch gekennzeichnet,**
**dass** in der Programmspeichereinheit (16) der Vorrichtung (1) oder in einem Programmspeicher (320) des Test- und Servicegeräts (32) zumindest ein Programm zum Testen von zumindest einem Flugkörper gespeichert ist.

10. Vorrichtung nach Anspruch 9,
**dadurch gekennzeichnet,**
**dass** in der Programmspeichereinheit (16) der Vorrichtung (1) oder in einem Programmspeicher (320) des Test- und Servicegeräts (32) mehrere Programme zum Testen jeweils unterschiedlicher Flugkörpertypen gespeichert sind.

11. Vorrichtung nach einem der vorhergehenden Ansprüche,
**dadurch gekennzeichnet,**
**dass** in der Programmspeichereinheit (16) der Vorrichtung (1) oder in einem Programmspeicher (320) des Test- und Servicegeräts (32) zumindest ein Programm zur Wartung eines Flugkörpers, insbesondere zum Laden eines Missionsplans in einen Speicher des Flugkörpers, gespeichert ist.

12. Vorrichtung nach Anspruch 11,
**dadurch gekennzeichnet,**
**dass** in der Programmspeichereinheit (16) der Vorrichtung (1) oder in einem Programmspeicher (320) des Test- und Servicegeräts (32) mehrere Programme zur Wartung jeweils unterschiedlicher Flugkörpertypen gespeichert sind.

13. Vorrichtung nach einem der vorhergehenden Ansprüche,
**dadurch gekennzeichnet,**
**dass** in der Programmspeichereinheit (16) der Vorrichtung (1) oder in einem Programmspeicher (320) des Test- und Servicegeräts (32) zumindest ein Programm zum Auslesen und Auswerten von Lebenszyklusdaten aus einem Datenspeicher zumindest eines Flugkörpers gespeichert ist.

14. Vorrichtung nach Anspruch 13,
**dadurch gekennzeichnet,**
**dass** in der Programmspeichereinheit (16) der Vorrichtung (1) oder in einem Programmspeicher (320) des Test- und Servicegeräts (32) mehrere Programme zum Auslesen und Auswerten von Lebenszyklusdaten jeweils unterschiedlicher Flugkörpertypen gespeichert sind.

15. Vorrichtung nach einem der vorhergehenden Ansprüche,
**dadurch gekennzeichnet,**
**dass** in der Programmspeichereinheit (16) ein Programm zum Erstellen eines Missionsplans für den Flugkörper (3) und/oder ein Programm zum Überspielen eines Missionsplans in den Flugkörper (3) gespeichert und in der Rechnereinheit ausführbar ist.

16. Vorrichtung nach einem der vorhergehenden Ansprüche,
**dadurch gekennzeichnet,**
**dass** in der Programmspeichereinheit (16) zumindest ein Trainingsprogramm für das Testen und/oder Warten des Flugkörpers (3) und/oder der Waffenstation (20) des Luftfahrzeugs (2) gespeichert und in der Rechnereinheit (14) ausführbar ist.

17. Anordnung aus einer Vorrichtung gemäß einem der vorhergehenden Ansprüche, einer Flugkörpersimulationseinrichtung (22) und einem Test- und Servicegerät (32), die mit der Vorrichtung über deren Schnittstelle(n) (18, 19; 118; 218) verbundenen sind.

18. Anordnung nach Anspruch 17,
**dadurch gekennzeichnet,**
**dass** die Flugkörpersimulationseinrichtung und das Test- und Servicegerät zu einem kombinierten Gerät (42) integriert ausgebildet sind.

## Claims

1. Apparatus for controlling function tests and/or service procedures for unmanned missiles that can be released by aircraft, having
- a command input unit (10);
- a data output unit (12);
- a computer unit (14);
- at least one program memory unit (16);
- a first interface (18), which can be connected to a missile simulation device (22) that can be mounted on a weapon station (20) of the aircraft (2), and
- a second interface (19), which can be connected to a test and service appliance (32) that can be mounted on the missile (3),
- wherein at least one control program for at least one test or service program stored in a program memory (220) of the missile simulation device (22) and/or a test or service program stored in a program memory (320) of the test and service appliance (32) can be stored in the program memory unit (16) and can be executed in the computer unit (14);
- wherein the at least one test or service program can be selected and started by a user using the command input unit (10), and
- wherein feedback from the test or service program is output to the user by means of the data output unit (12).

2. Apparatus for controlling function tests and/or service procedures for unmanned missiles that can be released by aircraft, having
- a command input unit (10);
- a data output unit (12);
- a computer unit (14);
- at least one program memory unit (16);
- an interface (118), which can be connected to a missile simulation device (22) that can be mounted on a weapon station (20) of the aircraft (2), and to a test and service appliance (32) that can be mounted on the missile (3),
- wherein at least one control program for at least one test or service program stored in a program memory (220) of the missile simulation device (22) and/or a test or service program stored in a program memory (320) of the test and service appliance (32) can be stored in the program memory unit (16) and can be executed in the computer unit (14);
- wherein the at least one test or service program can be selected and started by a user using the command input unit (10), and
- wherein feedback from the test or service program is output to the user by means of the data output unit (12).

3. Apparatus for controlling function tests and/or service procedures for unmanned missiles that can be released by aircraft, having
- a command input unit (10);
- a data output unit (12);
- a computer unit (14);
- at least one program memory unit (16);
- an interface (218), which can be connected to a combined appliance (42) incorporating a missile simulation device and a test and service appliance;
- wherein at least one control program for at least one test or service program stored in a program memory (220) of the missile simulation device (22) and/or a test or service program stored in a program memory (320) of the test and service appliance (32) can be stored in the program memory unit (16) and can be executed in the computer unit (14);
- wherein the at least one test or service program can be selected and started by a user using the command input unit (10), and
- wherein feedback from the test or service program is output to the user by means of the data output unit (12).

4. Apparatus according to one of Claims 1, 2 or 3,
**characterized**
**in that** checking means are provided that prompt a stored test or service program to be able to be selected or started by means of the command input unit (10) only if the associated interface (18, 19; 118; 218) is correctly connected to the weapon station (20) via the missile simulation device (22) or to the missile (3) via the test and service appliance (32).

5. Apparatus according to one of Claims 1 to 4,
**characterized**
**in that** the missile simulation device (22) and the test or service program thereof can be controlled by the control program executed in the computer unit (14).

6. Apparatus according to one of Claims 1 to 5,
**characterized**
**in that** the test and service appliance (32) and the test or service program thereof can be controlled by the control program executed in the computer unit (14).

7. Apparatus according to one of the preceding claims,
**characterized**
**in that** the program memory unit (16) of the apparatus (1) or a program memory (220) of the missile stimulation device (22) stores at least one program for testing the weapon station of at least one aircraft.

8. Apparatus according to Claim 7,
**characterized**
**in that** the program memory unit (16) of the apparatus (1) or a program memory (220) of the missile simulation device (22) stores a plurality of programs for testing the weapon stations of respective different aircraft types.

9. Apparatus according to one of the preceding claims,
**characterized**
**in that** the program memory unit (16) of the apparatus (1) or a program memory (320) of the test and service appliance (32) stores at least one program for testing at least one missile.

10. Apparatus according to Claim 9,
**characterized**
**in that** the program memory unit (16) of the apparatus (1) or a program memory (320) of the test and service appliance (32) stores a plurality of programs for testing respective different missile types.

11. Apparatus according to one of the preceding claims,
**characterized**
**in that** the program memory unit (16) of the apparatus (1) or a program memory (320) of the test and service appliance (32) stores at least one program for maintaining a missile, particularly for loading a mission plan into a memory of the missile.

12. Apparatus according to Claim 11,
**characterized**
**in that** the program memory unit (16) of the apparatus (1) or a program memory (320) of the test and service appliance (32) stores a plurality of programs for maintaining respective different missile types.

13. Apparatus according to one of the preceding claims,
**characterized**
**in that** the programme memory unit (16) of the apparatus (1) or a program memory (320) of the test and service appliance (32) stores at least one program for reading and evaluating life cycle data from a data memory of at least one missile.

14. Apparatus according to Claim 13,
**characterized**
**in that** the program memory unit (16) of the apparatus (1) or a program memory (320) of the test and service appliance (32) stores a plurality of programs for reading and evaluating life cycle data for respective different missile types.

15. Apparatus according to one of the preceding claims,
**characterized**
**in that** a programme for creating a mission plan for the missile (3) and/or a program for transferring a mission plan to the missile (3) are stored in the program memory unit (16) and can be executed in the computer unit.

16. Apparatus according to one of the preceding claims,
**characterized**
**in that** at least one training program for testing and/or maintaining the missile (3) and/or the weapon station (20) of the aircraft (2) is stored in the program memory unit (16) and can be executed in the computer unit (14).

17. Arrangement comprising an apparatus according to one of the preceding claims, a missile simulation device (22) and a test and service appliance (32), which are connected to the apparatus via their interface(s) (18, 19; 118; 218).

18. Arrangement according to Claim 17,
**characterized**
**in that** the missile simulation device and the test and service appliance are of integrated design to form a combined appliance (42).

## Revendications

1. Dispositif de commande de tests fonctionnels et/ou de procédures de service pour des engins volants sans pilote pouvant être largués par des aéronefs, comportant
- une unité d'entrée de commande (10) ;
- une unité de sortie de données (12) ;
- une unité de calcul (14) ;
- au moins une unité de stockage de programmes (16) ;
- une première interface (18) pouvant être reliée à un dispositif de simulation d'engin volant (22) pouvant être monté sur un système d'armes (20) de l'aéronef (2), et
- une seconde interface (19) qui peut être reliée à un appareil de test et de service (32) pouvant être monté sur l'engin volant (3),
- dans lequel au moins un programme de commande destiné à au moins un programme de test ou de service stocké dans une mémoire de programmes (220) du dispositif de simulation d'engin volant (22) et/ou dans une mémoire de programmes (320) de l'appareil de test et de service (32) peut être stocké dans l'unité de stockage de programmes (16) et peut être exécuté dans l'unité de calcul (14) ;
- dans lequel l'au moins un programme de test ou de service peut être sélectionné et lancé par un utilisateur au moyen de l'unité d'entrée de commande (10) et
- dans lequel des messages de rétroaction du programme de test ou de service sont délivrés à l'utilisateur au moyen de l'unité de sortie de données (12).

2. Dispositif de commande de tests fonctionnels et/ou de procédures de service pour des engins volants sans pilote pouvant être largués par des aéronefs comportant
- une unité d'entrée de commande (10) ;
- une unité de sortie de données (12) ;
- une unité de calcul (14) ;
- au moins une unité de stockage de programmes (16) ;
- une interface (118) pouvant être reliée à un dispositif de simulation d'engin volant (22) pouvant être monté sur un système d'armes (20) de l'aéronef (2) et à un appareil de test et de service (32) pouvant être monté sur l'engin volant (3) ;
- dans lequel au moins un programme de commande destiné à au moins un programme de test ou de service stocké dans une mémoire de programmes (220) du dispositif de simulation d'engin volant (22) et/ou dans une mémoire de programmes (320) de l'appareil de test et de service (32) peut être stocké dans l'unité de stockage de programmes (16) et peut être exécuté dans l'unité de calcul (14) ;
- dans lequel l'au moins un programme de test ou de service peut être sélectionné et lancé par un utilisateur au moyen de l'unité d'entrée de commande (10) et
- dans lequel des messages de rétroaction du programme de test ou de service sont délivrés à l'utilisateur au moyen de l'unité de sortie de données (12).

3. Dispositif de commande de tests fonctionnels et/ou de procédures de service pour des engins volants sans pilote pouvant être largués par des aéronefs comportant
- une unité d'entrée de commande (10) ;
- une unité de sortie de données (12) ;
- une unité de calcul (14) ;
- au moins une unité de stockage de programmes (16) ;
- une interface (218) pouvant être reliée à un dispositif de simulation d'engin volant et à un appareil (42) combiné intégrant un appareil de test et de service ;
- dans lequel au moins un programme de commande destiné à au moins un programme de test ou de service stocké dans une mémoire de programmes (220) du dispositif de simulation d'engin volant (22) et/ou dans une mémoire de programmes (320) de l'appareil de test et de service (32) peut être stocké dans l'unité de stockage de programmes (16) et peut être exécuté dans l'unité de calcul (14) ;
- dans lequel l'au moins un programme de test ou de service peut être sélectionné et lancé par un utilisateur au moyen de l'unité d'entrée de commande (10) et
- dans lequel des messages de rétroaction du programme de test ou de service sont délivrés à l'utilisateur au moyen de l'unité de sortie de données (12).

4. Dispositif selon l'une quelconque des revendications 1, 2 ou 3,
**caractérisé en ce qu'**il est prévu des moyens de test qui ont pour effet qu'un programme de test ou de service stocké ne puisse être sélectionné ou lancé au moyen de l'unité d'entrée de commande (10) que lorsque l'interface (18, 19 ; 118 ; 218) correspondante est correctement reliée par l'intermédiaire du dispositif de simulation d'engin volant (22) au système d'armes (20) ou par l'intermédiaire de l'appareil de test et de service (32) à l'engin volant (3).

5. Dispositif selon l'une quelconque des revendications 1 à 4,
**caractérisé en ce que** le dispositif de simulation d'engin volant (22) et son programme de test ou de service peuvent être commandés par le programme de commande exécuté dans l'unité de calcul (14).

6. Dispositif selon l'une quelconque des revendications 1 à 5,
**caractérisé en ce que** l'appareil de test et de service (32) et son programme de test ou de service peuvent être commandés par le programme de commande exécuté dans l'unité de calcul (14).

7. Dispositif selon l'une quelconque des revendications précédentes,
**caractérisé en ce qu'**au moins un programme destiné à tester le système d'armes d'au moins un aéronef est stocké dans l'unité de stockage de programmes (16) du dispositif (1) ou dans une mémoire de programmes (220) du dispositif de simulation d'engin volant (22).

8. Dispositif selon la revendication 7,
**caractérisé en ce qu'**une pluralité de programmes destinés à tester les systèmes d'armes de types d'aéronefs respectifs différents sont stockés dans l'unité de stockage de programmes (16) du dispositif (1) ou dans une mémoire de programmes (220) du dispositif de simulation d'engin volant (22).

9. Dispositif selon l'une quelconque des revendications précédentes,
**caractérisé en ce qu'**au moins un programme destiné à tester au moins un engin volant est stocké dans l'unité de stockage de programmes (16) du dispositif (1) ou dans une mémoire de programmes (320) de l'appareil de test et de service (32).

10. Dispositif selon la revendication 9,
**caractérisé en ce qu'**une pluralité de programmes destinés à tester des types respectifs différents d'engins volants sont stockés dans l'unité de stockage de programmes (16) du dispositif (1) ou dans une mémoire de programmes (320) de l'appareil de test et de service (32).

11. Dispositif selon l'une quelconque des revendications précédentes,
**caractérisé en ce qu'**au moins un programme destiné à la maintenance d'un engin volant, notamment destiné à charger un plan de mission dans une mémoire de l'engin volant, est stocké dans l'unité de stockage de programmes (16) du dispositif (1) ou dans une mémoire de programmes (320) de l'appareil de test et de service (32).

12. Dispositif selon la revendication 11,
**caractérisé en ce qu'**une pluralité de programmes destinés à la maintenance de types d'engins volants respectifs différents sont stockés dans l'unité de stockage de programmes (16) du dispositif (1) ou dans une mémoire de programmes (320) de l'appareil de test et de service (32).

13. Dispositif selon l'une quelconque des revendications précédentes,
**caractérisé en ce qu'**au moins un programme destiné à lire et à évaluer des données de cycle de vie à partir d'une mémoire de données d'au moins un engin volant est stocké dans l'unité de stockage de programmes (16) du dispositif (1) ou dans une mémoire de programmes (320) de l'appareil de test et de service (32).

14. Dispositif selon la revendication 13,
**caractérisé en ce qu'**une pluralité de programmes destinés à lire et à évaluer des données de cycle de vie d'engins volants respectifs différents sont stockés dans l'unité de stockage de programmes (16) du dispositif (1) ou dans une mémoire de programmes (320) de l'appareil de test et de service (32).

15. Dispositif selon l'une quelconque des revendications précédentes,
**caractérisé en ce qu'**un programme destiné à établir un plan de mission pour l'engin volant (3) et/ou **en ce qu'**un programme destiné à dupliquer un plan de mission dans l'engin volant (3) est stocké dans l'unité de stockage de programmes (16) et peut être exécuté dans l'unité de calcul.

16. Dispositif selon l'une quelconque des revendications précédentes,
**caractérisé en ce qu'**au moins un programme d'apprentissage destiné au test et/ou à la maintenance de l'engin volant (3) et/ou du système d'armes (20) de l'aéronef (2) est stocké dans l'unité de stockage de programmes (16) et peut être exécuté dans l'unité de calcul (14).

17. Système constitué d'un dispositif selon l'une quelconque des revendications précédentes, d'un dispositif de simulation d'engin volant (22) et d'un appareil de test et de service (32), qui sont reliés au dispositif par l'intermédiaire de son ou de ses interface(s) (18, 19 ; 118 ; 218).

18. Système selon la revendication 17,
**caractérisé en ce que** le dispositif de simulation d'engin volant et l'appareil de test et de service sont réalisés de manière intégrée en un appareil combiné (42).
